# EUROPÄISCHE PATENTANMELDUNG

(11) **EP 1 498 837 A1**
(43) Veröffentlichungstag der Anmeldung: **19.01.2005**
(21) Anmeldenummer: 03015609.5
(22) Anmeldetag: 15.07.2003
(51) Int. Cl.: G06K 9/00

(54) **Verfahren zur Extraktion von Minutienmerkmalen zur automatischen Fingerabdruckidentifizierung**

(71) Anmelder: Identification Systems DERMALOG GmbH, 20148 Hamburg (DE)
(72) Erfinder: Mull, Günther, 22085 Hamburg (DE)
(74) Vertreter: UEXKÜLL & STOLBERG

(57) **Zusammenfassung**

Die Erfindung betrifft ein Verfahren zur automatischen Fingerabdruckidentifizierung, bei dem Bilddaten des Fingerabdruckes erfasst und die Positionen von Minutien in dem Fingerabdruckbild automatisch bestimmt und mit denen abgespeicherter Fingerabdruckdaten aus einer Datenbank verglichen werden, um daraus für abgespeicherte Fingerabdruckdaten jeweils ein Übereinstimmungsmaß zu ermitteln. Die Erfindung ist dadurch gekennzeichnet, dass der Verlauf von Hautleisten zwischen jeweils zwei Minutien (M₁, M₂) erfasst und dass als charakteristische Werte für jede Hautleiste die Distanz zwischen den beiden Minutien (M₁, M₂) entlang des Hautleistenverlaufs und die Krümmungswerte des Hautleistenverlaufs an einer Mehrzahl von Punkten entlang der Hautleiste bestimmt werden, um diese mit den entprechenden charakteristischen Werten der Hautleisten von abgespeicherten Fingerabdruckdaten zu vergleichen und daraus ein Übereinstimmungsmaß zu berechnen.

## Beschreibung

Die vorliegende Erfindung betrifft ein Verfahren zur automatischen Fingerabdruckidentifizierung, bei dem Bilddaten des Fingerabdruckes erfasst und die Positionen von Minutien in dem Fingerabdruckbild automatisch bestimmt und mit denen abgespeicherte Fingerabdruckdaten aus einer Datenbank verglichen werden, um daraus für gespeicherte Fingerabdruckdaten jeweils ein Übereinstimmungsmaß zu ermitteln.

Bekannt sind Verfahren, die zur automatischen Fingerabdruckidentifikation (insbesondere im Rahmen von sogenannten AFIS-Systemen - AFIS = *Automated Finger Identification System*) die sogenannten Minutien in dem erfassten Fingerabdruckbild automatisch lokalisieren. Minutien sind die Endigungen und Verzweigungen von Hautleisten in Hautabdruckbildern. Herkömmliche Verfahren berücksichtigen dabei die Positionen (in X/Y-Koordinaten) der Minutien, um diese Positionsdaten mit denen abgespeicherter Fingerabdruckdaten aus einer Datenbank zu vergleichen und einen Ähnlichkeitswert oder ein Übereinstimmungsmaß zu berechnen. Liegt dieses Übereinstimmungsmaß über einem bestimmten Schwellenwert, so wird die Person als positiv identifiziert angesehen oder in einer Trefferliste vorgeschlagen, liegt der Ähnlichkeitswert unter dem Schwellenwert, so wird die Person als nicht identisch oder als nicht identifiziert angesehen. Ein derartiges Verfahren ist z.B. aus EP 0 366 850 B1 bekannt. Gelegentlich werden auch die Abstände der Minutien zueinander oder die Zahl der Hautleisten, die von einer zwei Minutien verbindenden Geraden geschnitten werden, bestimmt, und diese Daten mit denen gespeicherter Fingerabdruckdaten verglichen, um ein Übereinstimmungsmaß zu berechnen.

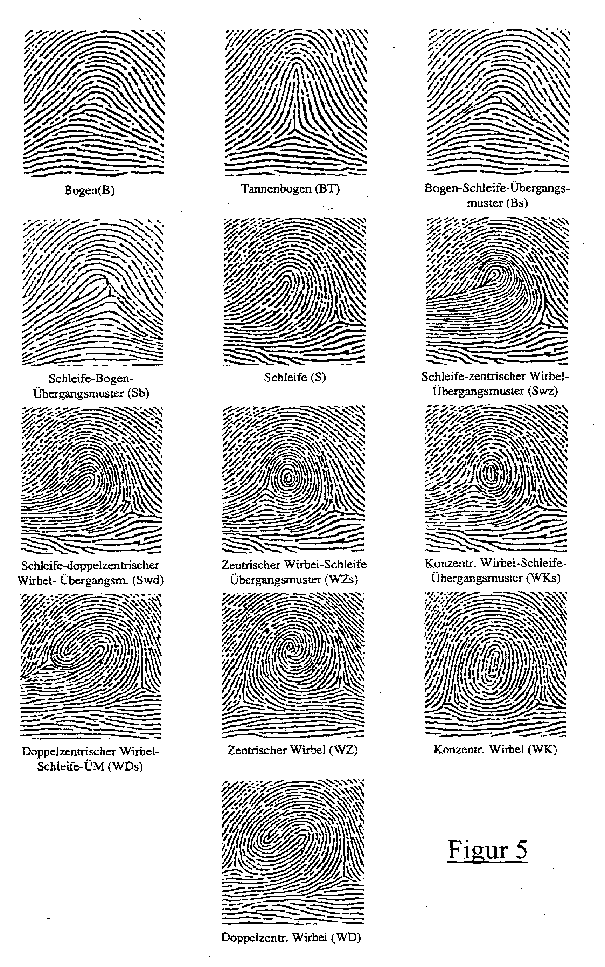

Um die Treffsicherheit weiter zu erhöhen, oder die Suche basierend auf Finger- und Handabdruckdaten zu beschleunigen, wurden ferner die Muster der Finger in bestimmte Gruppen eingeteilt und damit eine Anzahl von sogenannten Mustertypen definiert, die eine Untergruppierung und Vorauswahl ermöglichen. In Figur 5 ist eine solche Einteilung in 13 Mustertypen mit deren jeweiligen Bezeichnungen dargestellt (Einteilung nach Mull).

Für solche Mustertypen lässt sich jeweils ein Musterzentrum und eine Musterhauptrichtung bestimmen. Diese können auch automatisch in den erfassten Fingerabdruckdaten bestimmt werden. Ferner können die sogenannten Triradien in dem Fingerabdruckbild aufgefunden werden. Darunter versteht man einen Verzweigungspunkt, an dem die Hautleisten in drei Richtungen auseinanderstreben und eine Dreiteilung bilden. Dies ist z.B. insbesondere effektiv, wenn mehrere Finger ausgewertet werden, da dann z.B. auf der Basis von Mustertypen und der Anzahl der von einer Geraden zwischen Musterzentrum und Triradius geschnittenen Hautleisten eine sehr effektive Vorauswahl für die Identifikation getroffen werden kann. Dies wird z.B. auch von dem von Galton und Henry beschriebenen "Henry"-Verfahren verwendet.

Es ist Aufgabe der vorliegenden Erfindung, die Effektivität von automatischen, d.h. computer-gestützten, Fingerabdruckidentifizierungsverfahren zu erhöhen.

Zur Lösung dieser Aufgabe dient ein Verfahren zur automatischen Fingerabdruckidentifizierung, bei dem Bilddaten des Fingerabdruckes erfasst und die Positionen von Minutien in dem Fingerabdruckbild automatisch bestimmt und mit denen abgespeicherter Fingerabdruckdaten aus einer Datenbank verglichen werden, um daraus für abgespeicherte Fingerabdruckdaten jeweils ein Übereinstimmungsmaß zu ermitteln, dadurch gekennzeichnet, dass der Verlauf von Hautleisten zwischen jeweils zwei Minutien (M₁, M₂) erfasst und dass als charakteristische Werte für jede Hautleiste die Distanz zwischen den beiden Minutien (M₁, M₂) entlang des Hautleistenverlaufs und die Krümmungswerte des Hautleistenverlaufs an einer Mehrzahl von Punkten entlang der Hautleiste bestimmt werden, um diese mit den entsprechenden charakteristischen Werten der Hautleisten von abgespeicherten Fingerabdruckdaten zu vergleichen und daraus ein Übereinstimmungsmaß zu berechnen.

Es hat sich als überraschend effektiv erwiesen, Charakteristika des Verlaufs jeder Hautleiste zwischen zwei Minutien zu quantifizieren und mit Hilfe dieser charakteristischen Werte einen Vergleich mit abgespeicherten Fingerabdruckdaten durchzuführen, um ein Übereinstimmungsmaß zu berechnen. Dazu werden erfindungsgemäß zwischen zwei Minutien, die durch eine Hautleiste verbunden sind, die Distanz entlang des Verlaufs der Hautleiste zwischen den beiden Minutien, also die Länge der Hautleiste, und die Krümmung, d.h. die zweite Ableitung des Hautleistenverlaufs, an einer Mehrzahl von Punkten entlang der Hautleiste bestimmt.

Der Hautleistenverlauf lässt sich einfach automatisch ermitteln, indem in den Fingerabdruckbilddaten für jede Hautleiste, die mittig in der Hautleiste liegenden Pixel identifiziert und deren Pixelposition in einem sogenannten Skelettbild erfasst werden. Zur Vereinfachung und zur Datenreduktion ist es ausreichend, nur eine Teilmenge der Pixelpunkte, die den Hautleistenverlauf definieren, weiter zu verarbeiten, z.B. nur jedes fünfte Pixel auf dem Hautleistenverlauf. Dies bedeutet praktisch, dass der Hautleistenverlauf durch eine Folge kurzer Geraden oder einen Polygonzug approximiert wird.

In einer vorteilhaften Ausführungsform wird der Hautleistenverlauf stückweise durch Anpassung von Spline-Funktionen approximiert, d.h. durch Anpassung von Polynomen zweiten Grades. Daraus können dann auch einfach für jeden angepassten Bereich Krümmung, d.h. die zweite Ableitung der angepassten Funktion bestimmt werden.

Die Erfindung wird im Folgenden anhand von Ausführungsbeispielen in den Zeichnungen näher erläutert, in denen:
Figur 1 ein Fingerabdruckbild mit beispielhaft durch graue Umkreisung hervorgehobenen Minutien und Hautleisten zeigt;
Figur 2 ein Fingerabdruckbild mit durch graue Umkreisung hervorgehobenen Minutien und Musterzentrum zeigt;
Figur 3 ein Fingerabdruckbild mit durch graue Umkreisung hervorgehobenen Musterzentrum und Triradien zeigt;
Figur 4 ein Fingerabdruckbild mit durch graue Umkreisung hervorgehobenen Musterzentrum und Triradien zeigt; und
Figur 5 eine Einteilung von Fingerabdruckmustern in 13 Mustertypen zeigt.

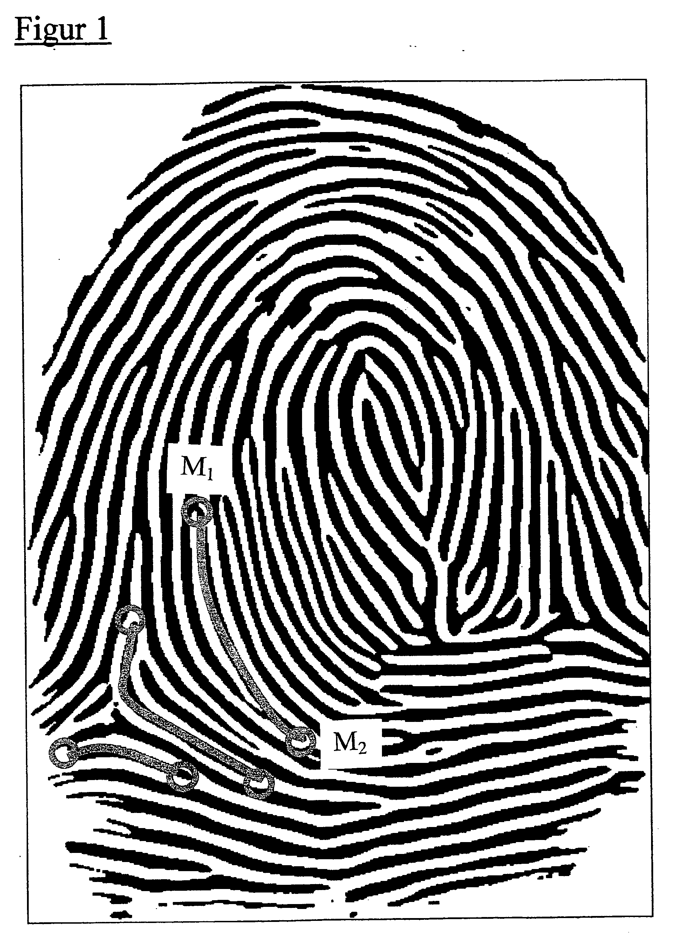

In Figur 1 ist ein schematisches Fingerabdruckbild dargestellt; das Bild und die folgenden sind insoweit schematisch, als es im Gegensatz zu den mit dem vorliegenden Verfahren tatsächlich ausgewerteten Bildern keine Graustufen der Fingerabdrücke enthält, um die visuelle Erfassbarkeit zu verbessern.

In Figur 1 sind beispielhaft Minutien M₁ und M₂ grau umkreist markiert, die von dem Bildverarbeitungsprogramm zur Ausführung des Verfahrens der vorliegenden Erfindung ermittelt wurden. Der Verlauf der Hautleiste zwischen den Minutien M₁ und M₂ ist ebenfalls durch eine graue Linie hervorgehoben, wie auch zwei weitere Minutienpaare mit den zugehörigen Leistenverläufen.

Der Verlauf der Hautleiste zwischen den Minutien M₁ und M₂ kann z.B. dadurch erfasst werden, indem ein sogenanntes Skelettbild erzeugt wird, d.h. es werden die senkrecht zur Verlaufsrichtung in der Mitte der in ihrer Breite mehrere Bildpunkte (Pixel) überdeckenden Hautleiste liegenden Pixel ermittelt und als Verlaufspunkt der Hautleiste zwischengespeichert. Der Hautleistenverlauf wird somit durch eine Folge von Pixeln beschrieben. Zur Datenreduzierung und zur Beschleunigung des Verfahrens kann vorgesehen sein, dass nicht alle Pixel des so erfassten Hautleistenverlaufs weiterverarbeitet werden, sondern z.B. nur jeder Fünfte oder Zehnte. Im Ergebnis bedeutet dies, dass der Hautleistenverlauf durch eine Folge von größeren geraden Stücken approximiert wird, die aber hinreichend klein sind, um daraus noch die gewünschten Verlaufsinformationen gewinnen zu können.

Als charakteristische Informationen der Hautleistenverläufe werden im vorliegenden Verfahren für jede Hautleiste die Verlaufslänge der Hautleiste zwischen den Minutien M₁ und M₂, d.h. die Länge der Hautleiste entlang des Verlaufs der Hautleiste bestimmt. Darüber hinaus werden an einer Mehrzahl von Punkten entlang des Verlaufs der Hautleiste zwischen den Minutien M₁ und M₂ die lokalen Krümmungen der Hautleistenkurve bestimmt. Die Krümmungen können z.B. durch Bildung der zweiten Ableitung des Kurvenverlaufs bestimmt werden. In einfacher Weise können die Krümmungen auch bestimmt werden, indem stückweise an den Hautleistenverlauf Spline-Funktionen angepasst werden, deren Krümmungen einfach ermittelbar sind.

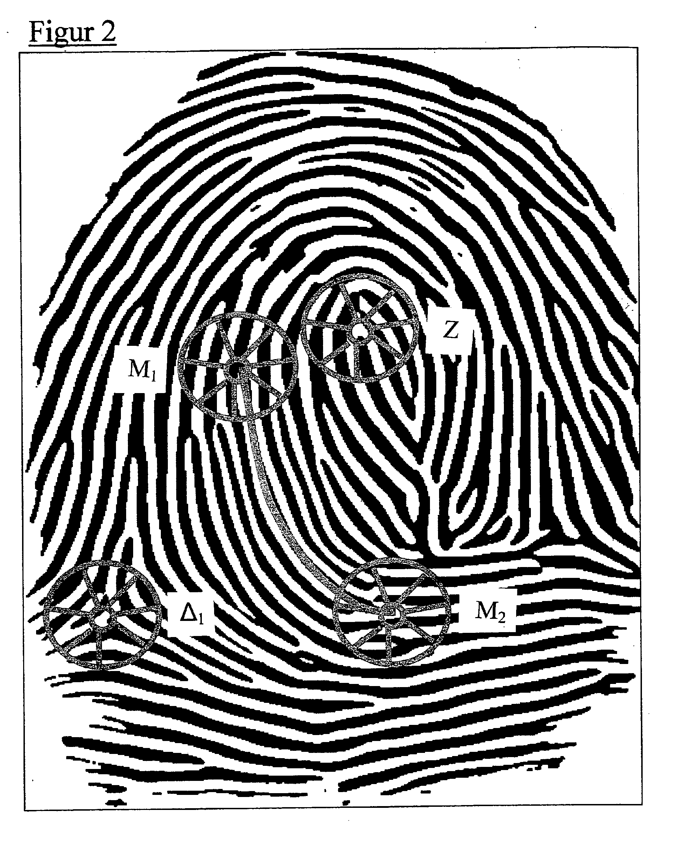

In Figur 2 ist ein schematisches Fingerabdruckbild dargestellt, in dem beispielhaft die automatisch ermittelten Minutien M₁ und M₂, der Verlauf der Hautleiste dazwischen, das Musterzentrum und ein Triradius Δ₁ durch Umkreisung mit grauer Linie hervorgehoben sind. Gemäß einer bevorzugten Ausführungsform der Erfindung wird um die Punkte Z, M₁, M₂ und Δ₁ jeweils ein Kreis mit vorgegebenem Radius gelegt und jeweils die Anzahl, der durch diesen Kreis verlaufenden Hautleisten bestimmt. Auch durch diese Anzahlen, die einer "Hautleistendichte" in den betreffenden Gebieten entsprechen, lässt sich ein effektiver Vergleich eines aktuell zu identifizierenden Fingerabdruckbildes mit abgespeicherten Fingerabdruckdaten durchführen und ein Übereinstimmungsmaß bestimmen.

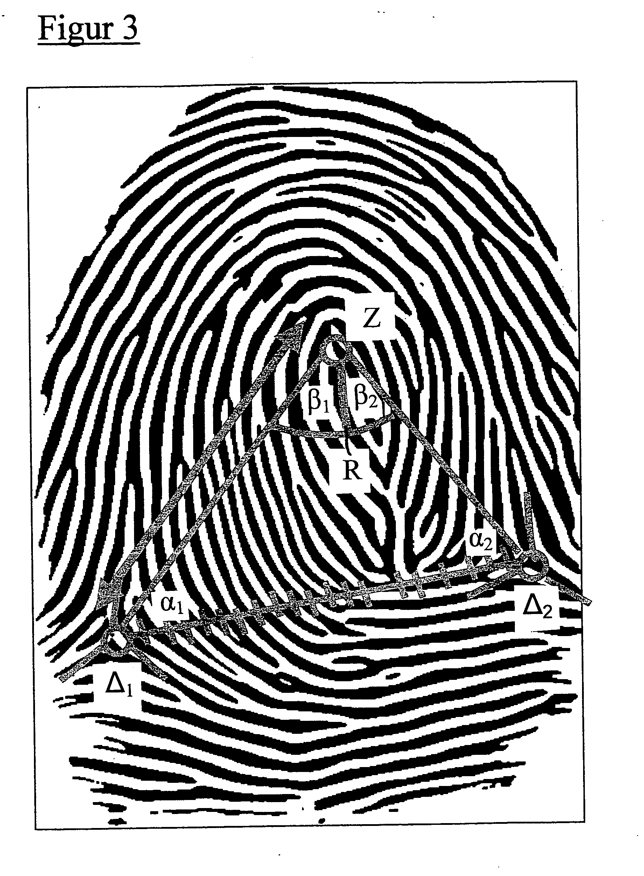

In Figur 3 ist ebenfalls ein schematisches Fingerabdruckbild dargestellt, in dem das Musterzentrum Z und zwei Triradien Δ₁ und Δ₂ durch Umkreisung mit grauer Linie hervorgehoben sind. Gemäß einer Ausführungsform der Erfindung werden die Abstände zwischen dem Musterzentrum und den Triradien, d.h. die Längen der drei einezeichneten Geraden zwischen Z, Δ₁ und Δ₂, bestimmt und zur schnellen Vorfilterung beim Vergleich eines aktuellen Fingerabdruckbildes mit abgespeicherten Fingerabdruckdaten verwendet.

Gemäß einer weiteren bevorzugten Ausführungsform wird die Anzahl der Hautleisten bestimmt, die die in Figur 3 dargestellten Geraden schneiden. In Figur 3 sind diese Schnittpunkte beispielhaft für die die Triradien Δ₁ und Δ₂ verbindende Gerade eingezeichnet. Auch diese Anzahl von Hautleisten zwischen den genannten Punkten können dazu verwendet werden, um ein Übereinstimmungsmaß zu berechnen.

Weiter können in einer Ausführungsform der Erfindung für jeden Triradius Δ₁, Δ₂ der eingeschlossene Winkel α₁, α₂ zwischen der Geraden vom Triradius Δ₁, Δ₂ zum Musterzentrum Z und der Geraden zu dem anderen Triradius Δ₂, Δ₁ sowie der Winkel β₁, β₂ zwischen der Geraden vom Triradius Δ₁, Δ₂ zum Musterzentrum Z und der Musterhauptrichtung R bestimmt werden. Diese genannten Winkel werden gemäß einer bevorzugten Ausführungsform der Erfindung mit denjenigen gespeicherter Fingerabdruckdaten verglichen, um ein weiteres Übereinstimmungsmaß zu gewinnen.

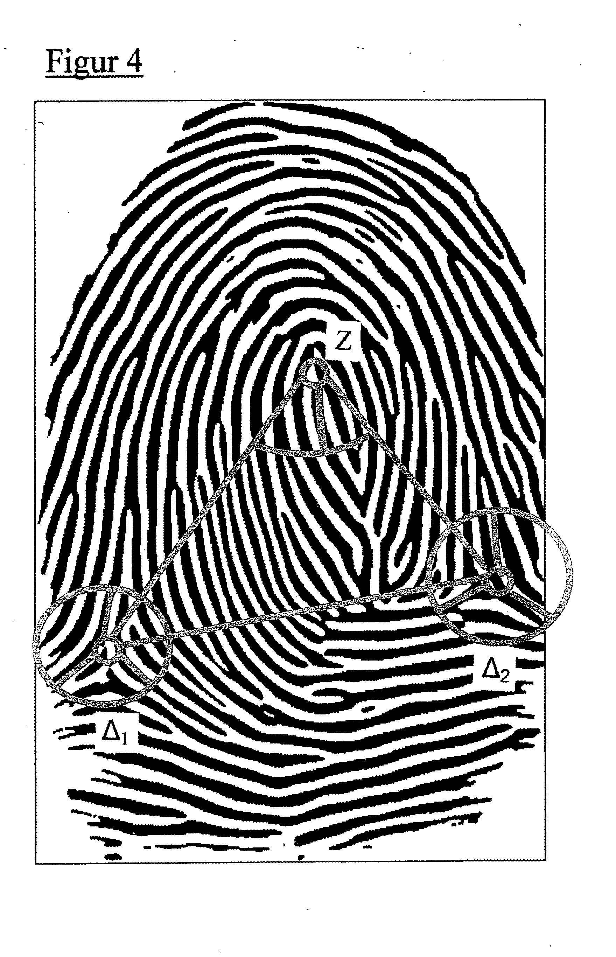

In Figur 4 sind wiederum zwei Triradien Δ₁, Δ₂ und das Musterzentrum Z durch graue Umkreisung hervorgehoben. Für die Triradien Δ₁, Δ₂ sind gemäß einer bevorzugten Ausführungsform der Erfindung ferner die Richtungen der von jedem Triradius auseinanderstrebenden Hautleisten durch graue Linien hervorgehoben, die gemäß einer bevorzugten Ausführungsform der Erfindung automatisch in den Bilddaten ermittelt werden. Durch die für jeden Triradius ermittelten drei Richtungen lassen sich weitere Winkel bestimmen, bspw. in Bezug auf die Gerade zum Musterzentrum Z, die als weitere charakteristische Größen mit denjenigen abgespeicherter Fingerabdruckdaten verglichen werden können, um ein Übereinstimmungsmaß zu berechnen.

## Patentansprüche

1. Verfahren zur automatischen Fingerabdruckidentifizierung, bei dem Bilddaten des Fingerabdruckes erfasst und die Positionen von Minutien in dem Fingerabdruckbild automatisch bestimmt und mit denen abgespeicherter Fingerabdruckdaten aus einer Datenbank verglichen werden, um daraus für abgespeicherte Fingerabdruckdaten jeweils ein Übereinstimmungsmaß zu ermitteln, **dadurch gekennzeichnet, dass** der Verlauf von Hautleisten zwischen jeweils zwei Minutien (M₁, M₂) erfasst und dass als charakteristische Werte für jede Hautleiste die Distanz zwischen den beiden Minutien (M₁, M₂) entlang des Hautleistenverlaufs und die Krümmungswerte des Hautleistenverlaufs an einer Mehrzahl von Punkten entlang der Hautleiste bestimmt werden, um diese mit den entprechenden charakteristischen Werten der Hautleisten von abgespeicherten Fingerabdruckdaten zu vergleichen und daraus ein Übereinstimmungsmaß zu berechnen.

2. Verfahren nach Anspruch 1, **dadurch gekennzeichnet, dass** zur Bestimmung jedes Hautleistenverlaufs zunächst die mittig auf dem jeweiligen Hautleistenverlauf liegenden Pixel bestimmt werden.

3. Verfahren nach Anspruch 2, **dadurch gekennzeichnet, dass** zur Datenreduzierung nur eine Teilmenge der Pixel des Hautleistenverlaufs gespeichert wird.

4. Verfahren nach Anspruch 2 oder 3, **dadurch gekennzeichnet, dass** an die Pixel stückweise entlang des Hautleistenverlaufs zwischen zwei Minutien Spline-Funktionen angepasst werden, um den Hautleistenverlauf zu beschreiben.

5. Verfahren nach einem der vorhergehenden Ansprüche, **dadurch gekennzeichnet, dass** in den Bilddaten des Fingerabdrucks ferner die Positionen von einem Musterzentrum (Z) und von Triradien (Δ₁, Δ₂) bestimmt werden und dass jeweils in einem Kreis mit vorgegebenen Radius um die Minutien (M₁, M₂), Triradien (Δ₁, Δ₂), Musterzentrum (Z) die Anzahl von ermittelten Hautleisten bestimmt wird, und diese ermittelten Anzahlen mit den entsprechenden Anzahlen abgespeicherter Fingerabdruckdaten verglichen werden, um ein Übereinstimmungsmaß zu berechnen.

6. Verfahren nach einem der vorhergehenden Ansprüche, **dadurch gekennzeichnet, dass** zur schnellen Vorfilterung beim Vergleich von Fingerabdruckdaten mit abgespeicherten Fingerabdruckdaten die Distanzen zwischen Musterzentrum und Triradien bestimmt werden und mit den entsprechenden Distanzen abgespeicherter Fingerabdruckdaten verglichen werden.

7. Verfahren nach einem der Ansprüche 1 bis 4, **dadurch gekennzeichnet, dass** in den Bilddaten des Fingerabdrucks ferner die Positionen von einem Musterzentrum (Z), von Triradien (Δ₁, Δ₂) und die Musterhauptrichtung (R) bestimmt werden und dass für jeden Triradius (Δ₁, Δ₂) der eingeschlossene Winkel (α₁, α₂) zwischen der Geraden vom Triradius zum Musterzentrum (Z) und der Geraden zu einem anderen Triradius (Δ₂, Δ₁) und der Winkel (β₁, β) zwischen der Geraden vom Triradius zum Musterzentrum (Z)² und der Musterhauptrichtung (R) bestimmt werden und die genannten Winkel (α₁, α₂, β₁, β) mit denen abgespeicherter Fingerabdruckdaten verglichen werden, um ein Übereinstimmungsmaß zu berechnen.

8. Verfahren nach einem der vorhergehenden Ansprüche, **dadurch gekennzeichnet, dass** in den Bilddaten des Fingerabdrucks ferner die Positionen von einem Musterzentrum (Z) und von Triradien (Δ₁, Δ₂) bestimmt werden und dass für jeden Triradius (Δ₁, Δ₂) die Länge der Geraden zum Musterzentrum (Z) und die Anzahl der von dieser Geraden geschnittenen Hautleisten und die Länge der Geraden von einem Triradius (Δ₁) zum anderen (Δ₂) und die Anzahl der von dieser Geraden geschnittenen Hautleisten bestimmt werden, und dass diese Längen and Anzahlen mit denen abgespeicherter Fingerabdruckdaten verglichen werden, um ein Übereinstimmungsmaß zu berechnen.

9. Verfahren nach einem der vorhergehenden Ansprüche, **dadurch gekennzeichnet, dass** für jeden Triradius (Δ₁, Δ₂) die Richtungen der drei auseinanderstrebenden Hautleisten bestimmt werden und dadurch drei Winkel in Bezug auf eine vorgebene Richtung bestimmt werden, die jeweils mit denen abgespeicherter Fingerabdruckdaten verglichen werden, um ein Übereinstimmungsmaß zu berechnen.
